# EUROPEAN PATENT SPECIFICATION

(11) **EP 3 000 736 B1**
(45) Date of publication and mention of the grant of the patent: **29.05.2019**
(21) Application number: 15186152.3
(22) Date of filing: 22.09.2015
(51) Int. Cl.: B64D 45/02, B29C 70/88, H01B 1/04, H01B 1/08, H01B 1/12

(54) **METHOD FOR MITIGATING EDGE GLOW AND RESULTING COMPOSITE STRUCTURE**
VERFAHREN ZUR MINDERUNG VON KANTENGLÜHEN
PROCÉDÉ POUR L'ATTÉNUATION DE L'INCANDESCENCE DES BORDS

(30) Priority: 26.09.2014 US 201414497576
(43) Date of publication of application: 30.03.2016
(73) Proprietor: The Boeing Company, Chicago, IL 60606-1596 (US)
(72) Inventor: Nguyen Le, Quynhgiao, Chicago, 60606 (US); Greegor, Robert B., Chicago, 60606 (US)
(74) Representative: Witte, Weller & Partner Patentanwälte mbB

(56) References cited:
- EP-A1- 2 399 739
- EP-A2- 0 629 549
- EP-A2- 0 900 647
- CA-A1- 2 885 204
- US-A1- 2009 001 217

## Description

### TECHNICAL FIELD

This disclosure generally relates to lightning strike protection for structures made from composite materials and, more particularly, to a method for mitigating edge glow, a lightning induced phenomenon generally observed on exposed ends of carbon fibers in structures made from carbon fiber reinforced plastic.

### BACKGROUND

The use of composite materials in structures requiring superior strength-to-weight and strength-to-stiffness ratios has been increasing. For example, in the aerospace industry, composite materials are becoming widely used to manufacture aerospace structures such as aircraft ribs, spars, panels, fuselages, wings, wing boxes, fuel tanks and tail assemblies because they are lightweight and strong, and therefore provide fuel economy and other benefits.

One type of composite material commonly used in the aerospace industry is carbon fiber reinforced plastic ("CFRP"). CFRP generally comprises one or more composite layers or plies laminated together to form a sheet, laminate or layup. Each of the composite layers or plies comprises a reinforcement material and a matrix material. The matrix material surrounds, binds and supports the reinforcement material. The reinforcement material provides structural strength to the matrix material and the CFRP. The matrix material is generally a non-conductive polymer such as an epoxy resin. The reinforcement material generally consists of strands of carbon fiber, which are electrically conductive.

As used herein, the term "composite structure" means a structure that is manufactured, fabricated or assembled, in whole or in part, from one or more components made from CFRP (i.e., CFRP components) including, without limitation, aerospace structures, such as aircraft ribs, spars, panels, fuselages, wings, wing boxes, fuel tanks and tail assemblies. In order to manufacture, assemble, form or fabricate a composite structure, CFRP sheets, laminates or layups may be cut or trimmed to a desired shape or size after the composite layers or plies are laid up, laminated and cured to form CFRP components.

Cutting typical CFRP sheets, laminates and layups results in tips or ends of the reinforcement material, i.e., the conductive carbon fibers, in each of the composite layers becoming exposed to the environment at the cut or trimmed edges.. Tips or ends of the reinforcement material may also become exposed to the environment at external drop offs or sloped upper surfaces of a CFRP component. For example, CFRP components may be formed with a first end having a first thickness and a second end having a second thickness smaller than the first thickness, and having a transition area between the first end and the second end with a sloped upper surface. Such a varying thickness may be formed during the lamination process by laying up composite layers with progressively smaller lengths on top of each other, such that ends of the progressively smaller length composite layers form the sloped upper surface having a downward slope or drop off. Such drop offs may be positioned at any location along the length of a CFRP component. The ends of composite layers forming the drop off may not be covered by matrix material, leaving the tips or ends of the reinforcement material, i.e., the conductive carbon fibers, exposed to the environment. Cut or trimmed edges and drop offs not covered by matrix material are collectively referred to herein as "exposed fiber surfaces."

Carbon fibers generally have more resistance to electricity than structural materials traditionally used in the aerospace industry such as aluminum. Thus, composite structures made with CFRP components are more susceptible to damage from a lightning strike than structures made from materials traditionally used because CFRP does not easily conduct and dissipate electrical currents in the 200 kA range generated by a lightning strike. Among the physical phenomena observed from lightning strikes is a phenomenon known as "edge glow," which describes the condition in which a glow of light combined with particle or plasma ejections appears at the tips or ends of the carbon fibers in the exposed fiber surfaces of CFRP components in a composite structure. Edge glow is caused by voltage differences between conductive, composite layers of the CFRP, and typically occurs in high current density areas resulting from a lightning strike, where the voltage potential is at its maximum, such as the exposed fiber surfaces. Edge glow is a potential fuel ignition source when it occurs in areas containing fuel or fuel vapor such as in fuel tanks or near fuel lines (collectively referred to herein as "a fuel environment").

The general design approach in the aerospace industry to prevent edge glow from igniting fuel or fuel vapor in a fuel environment is to mask or seal all exposed fiber surfaces that are exposed to a fuel environment, thus masking any edge glow at the exposed fiber surfaces. One method is to seal the exposed fiber surfaces with a non-conductive or insulating material, such as a polysulfide sealant, that inhibits transmission of the glow of light and/or physically contains ejected particles resulting from edge glow away from the fuel environment. That is, the insulating material prevents edge glow from penetrating through the insulating material and into the fuel environment. Such insulating materials are typically applied in two layers by hand to a total thickness of about 0,3302 to 0,635 cm [0.130 to 0.250 inch]. A first layer of low viscosity polysulfide sealant, about 0,00508 cm [0.002 inch] thick, is applied and allowed to cure. Afterwards, a second layer, about 0,3302 to 0,635 cm [0.130 to 0.250 inch] thick, of a sealant having similar chemistry to sealant in the first layer is applied onto the first layer. The two layers combine to mask any edge glow. Another known method to guard against edge glow, sparking and plasma discharges around fastened joints in a composite structure and trimmed edges of a CFRP component is to place an insulating cap over the cut edge or fastened joints.

The foregoing methods only mask or shield edge glow at the exposed fiber surfaces and do not prevent, reduce or eliminate edge glow. Also, these methods are labor intensive and require excessive production flow time because of the amount of work needed to prepare exposed fiber surfaces for successful sealant adhesion and the long cure times associated with the sealants. These methods also add a significant weight to a composite structure because of the required thickness and/or multiple layers of the sealants, which in the aerospace industry, increases aircraft fuel consumption and reduces payload.

CA 2 885 204 A1 discloses a method for mitigating edge glow according to the preamble of claim 1.

It is therefore desired to have a method for mitigating edge glow that is less labor intensive, less time consuming and provides a weight savings. As used herein, the term "mitigating edge glow" means reducing the intensity of edge glow or eliminating edge glow intensity.

### SUMMARY

The invention is defined in the independent claims 1 and 6.

The foregoing purposes, as well as others that will be apparent, are achieved generally by applying one or more thin layers of conductive coating material over an exposed fiber surface (i.e., a cut edge or a drop off) of a carbon fiber reinforced plastic component in a composite structure to reduce any inter-ply voltage potential that may exist between composite layers of the carbon fiber reinforced plastic during a lightning strike. The one or more layers of conductive coating material are applied to a total thickness of about 0,00254 cm [.001 inch] to 0,00762 cm [.003 inch] to provide a continuous coverage over the cut or trimmed edges and drop offs, which are often not smooth. The conductive coating material has a conductivity of at least 10⁴ Siemens/meter to eliminate edge glow intensity. The conductive coating material is a mixture comprising a conductive doping material dispersed in a carrier medium. The conductive doping material may be a solid, a solid suspended in a liquid, or a liquid. Other objects, features, and advantages of the present disclosure will be apparent when the detailed description is considered in conjunction with the following drawings.

### BRIEF DESCRIPTION OF THE DRAWINGS

Various embodiments will be hereinafter described with reference to drawings for the purpose of illustrating the foregoing and other aspects of the disclosure.
FIG. 1 is a flow chart illustrating the steps of a method for fabricating a composite structure.
FIG. 2 is a flow chart illustrating the steps of a method for mitigating edge glow.
FIG. 3 is a cross-sectional view of a carbon fiber reinforced plastic component having a cut edge covered by a layer of conductive coating material.
FIG. 4 is a cross-sectional view of a carbon fiber reinforced plastic component having a drop off covered by a layer of conductive coating material.
FIG. 5 is an illustration of a composite structure.

### DETAILED DESCRIPTION

In the following detailed description, various embodiments of a method for mitigating edge glow in a composite structure comprising carbon fiber reinforced plastic (CFRP) components having an exposed fiber surface, i.e., a cut edge or a drop off, are described to illustrate the general principles of the present disclosure. It will be recognized by one skilled in the art that the present disclosure may be practiced in other analogous applications or environments and/or with other analogous or equivalent variations of the illustrative embodiments. For example, the method may be used with any type of composite material that poses the risk of edge glow, and any type of conductive coating material may be used to provide the desired conductivity between composite layers of the composite material as long as the conductive coating material satisfies the electrical conductivity and other properties desired for the intended applications. It should also be noted that those methods, procedures, components, or functions which are commonly known to persons of ordinary skill in the field of the disclosure are not described in detail herein.

In the disclosed method, one or more layers of conductive coating material, preferably a single thin layer, is applied over an exposed fiber surface of the CFRP component. The one or more layers of conductive coating material is applied to a total thickness of about 0.00254 cm [0.001 inch] to 0.00762 cm [0.003 inch], preferably 0.00508 cm [0.002 inch], to provide continuous coverage over the exposed fiber surfaces, which are often not smooth. The one or more layers of conductive coating material has a conductivity of least 10⁴ Siemens/meter to eliminate edge glow intensity.

The conductive coating material forms a bridge at the exposed fiber surfaces to electrically connect the tips or ends of the carbon fibers in each of the composite layers or plies of the CFRP component. This bridge promotes electrical current flow between the composite layers and decreases the inter-ply voltage potential between the composite layers, thereby mitigating edge glow. Edge glow intensity may be further reduced by increasing the conductivity of the conductive coating material. A conductive coating material having conductivity of 10⁴ Siemens/meter would approximately reach the conductivity level of the carbon fibers in the CFRP component, and would therefore reduce the inter-ply voltage potential between composite layers to a level that would substantially eliminate edge glow intensity. Conductive coating materials having conductivity greater than 10⁴ Siemens/meter is used to further reduce the inter-ply voltage potential between composite layers. Therefore, instead of the current two-layer nonconductive sealing approach of physically masking edge glow, the disclosed method permits improved design performance by mitigating edge glow to significantly reduce or eliminate the chance for igniting fuel or fuel vapor in a fuel environment, while at the same time advantageously achieving manufacturing and cost efficiencies, and weight reduction.

The conductive coating material is a mixture composed of a conductive doping material dispersed in a carrier medium. The carrier medium may be a liquid, for example, a resin system, suitable for application to a CFRP component that is exposed to a fuel environment. Specifically, the carrier medium should not degrade or dissolve in a fuel environment and should not interact with fuel or fuel vapors in a manner that is harmful to CFRP. If used in the aerospace industry, the carrier medium must be "aerospace grade," that is, it must meet aerospace industry requirements for use in aerospace structures. For example, an aerospace grade sealant may be used. The carrier medium should have a viscosity of about 60 to 90 mPa·s (centipoise). This allows the conductive coating material to have good processability, i.e., the ability to be applied to exposed fiber surfaces using conventional industry coating application methods such as brushing, spraying and dipping, while ensuring sufficient thickness, adhesion and coverage of the exposed fiber surfaces. The carrier medium should also possess the qualities of mechanical hardness and impact resistance, and, in aerospace applications, resistance to jet and hydraulic fluids and durability in aerospace operating environments that include exposure to corrosive elements, thermal, humidity and altitude cycling.

Examples of suitable carrier mediums are polysulfide sealants commonly used in the aerospace industry for sealing or masking cut edges and drop offs, for example, PR-1776 and PRO-SEAL 870 & 890 from PPG Industries, Inc., Pittsburgh, Pennsylvania. Alternatively, the carrier medium can be an epoxy coating or adhesive material of the type commonly used in the aerospace industry such as such as Bisphenol-A diglycidyl ether, triglycidyl-p-aminophenol, N,N,N,N-tetraglycidyl-4,4-methylenebis benzylamine based systems and polyurethane coating systems such as polyester polyols cured with polyisocyanate.

The conductive doping material is a conductive solid substance, a solid substance suspended in a liquid substance or a liquid substance suitable for use in a fuel environment and, if necessary, aerospace grade. The conductive doping material should be capable of forming a stable dispersion in the carrier medium. Also, the conductive doping material should not interfere with, degrade or neutralize any of the desired properties of the carrier medium such as mechanical strength, solvent resistance, durability, and processability. The conductive doping material should also possess high aspect (length to diameter) ratios, preferably greater than 150, such that the desired electrical conductivity can be achieved at a lower percolation threshold and not interfere with the performance of the carrier medium. Percolation threshold represents the critical filler content limit in a polymer matrix beyond which a network of conductors may be formed to allow several orders of magnitude increases in electrical conductivity.

Examples of suitable conductive doping materials are indium tin oxide solutions, carbon nanotubes, metallic (for example, silver, nickel, and copper) or semiconducting (for example, silicon and gallium nitride) nanowires, carbon black, graphene and intrinsically conductive polymers (for example, polyaniline and polystyrene sulfonate). Carbon black is a fine carbon powder made by burning hydrocarbons in insufficient air. Graphene is pure carbon in the form of a very thin, nearly transparent sheet, one atomic layer thick. One example of a suitable intrinsically conductive polymer are the CLEVIOS™ conductive polymers manufactured by Heraeus Precious Metals GmbH & Co. KG, Leverkusen, Germany.

The conductive coating material may be prepared by selecting a suitable carrier medium and a suitable conductive doping material, the controlled addition of the required quantities of carrier medium and conductive doping material, and then mixing or combining them together to produce the conductive coating material. The amount of conductive doping material added to the carrier medium should be less than about 1% to 2 % by weight of the carrier medium, and the mixture should have a specific gravity of not more than about 1.65. The conductive doping material and carrier medium are combined together using methods generally used in the industry for preparing coating materials. Other substances may be added to the conductive coating material depending on the desired end use or application, provided that the other substances do not substantially reduce or interfere with the desired conductivity, strength, solvent resistance, durability and processability.

Once the appropriate conductive coating material has been prepared or selected, the exposed fiber surface of a CFRP component is prepared for the application of the conductive coating using methods known in the industry. Typically, the exposed fiber surfaces are sanded and wiped with a solvent. After the exposed fiber surfaces have been prepared, one or more thin layers of conductive coating material may be applied by hand using a brush or roller to a total thickness of about 0,00254 to 0,00762 cm [0.001 to 0.003 inch]. One layer is preferred to minimize the labor involved. Alternatively, the conductive coating material may be applied by automated methods generally known in the industry such as spraying or dipping.

In the case of a drop off type of exposed fiber surface, the conductive coating material is applied to the drop off after the composite layers have been laminated together to create a CFRP component having a drop off. As for cut edge types of exposed fiber surfaces, the conductive coating material may be applied to the cut edges after the CFRP sheet, laminate or layup has been formed and cut or trimmed to the desired size or shape to form the CFRP component. Once the conductive coating material that was applied to the exposed fiber surfaces has cured, the CFRP component is ready for follow-on processing steps such as testing, assembly or fabrication into a composite structure. For example, one or more CFRP components may be assembled together to form a composite structure defining a fuel environment such as an aircraft fuel tank or a wing box containing fuel lines.

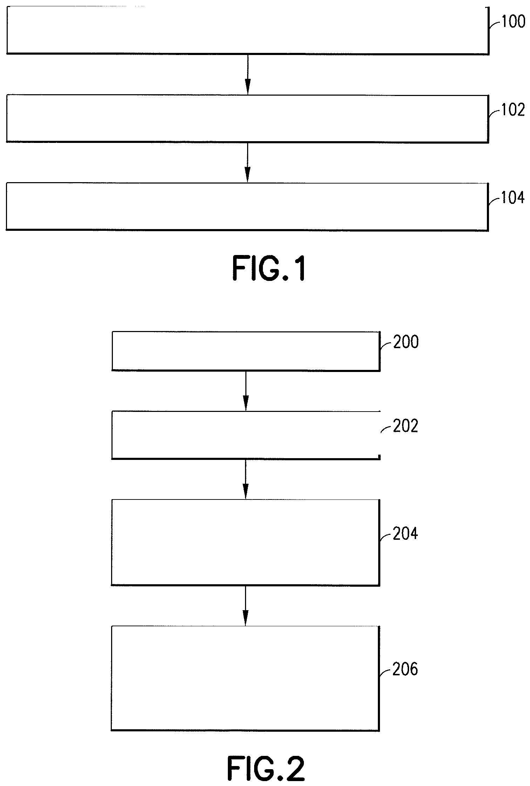

Alternatively, the conductive coating material may be applied to exposed fiber surfaces after assembly or fabrication of a composite structure. For example, in one embodiment of a method for fabricating a composite structure (see, FIG. 1), at least one CFRP sheet, laminate or layup is trimmed to form a CFRP component with at least one cut edge in step 100 (step 100: forming at least one carbon fiber reinforced plastic component with at least one cut edge). The composite structure is formed in step 102 (step 102: forming a composite structure from the at least one carbon fiber reinforced plastic component) from the at least one CFRP component and a conductive coating material is applied in step 104 (step 104: applying a conductive coating material to the cut edge) to the cut edge.

In another embodiment, a method for mitigating edge glow in a composite structure made from at least one CFRP component having an exposed fiber surface is illustrated in FIG. 2. A carrier medium is selected in step 200 (step 200: selecting a carrier medium) and a conductive doping material is selected in step 202(step 202: selecting a conductive doping material). The carrier medium and the doping material are combined to form a conductive coating material in step 204 (step 204: combining the carrier medium and the conductive doping material to form a conductive coating material) and applied over the exposed fiber surface in step 206(step 206: applying the conductive coating material over an exposed fiber surface of a carbon fiber reinforced plastic component). As explained above, the conductive coating material can be applied to the exposed fiber surface before the composite structure (for example, a wing or fuel tank) is assembled or fabricated or, the conductive coating material can be applied to the exposed fiber surface after assembly or fabrication of the composite structure.

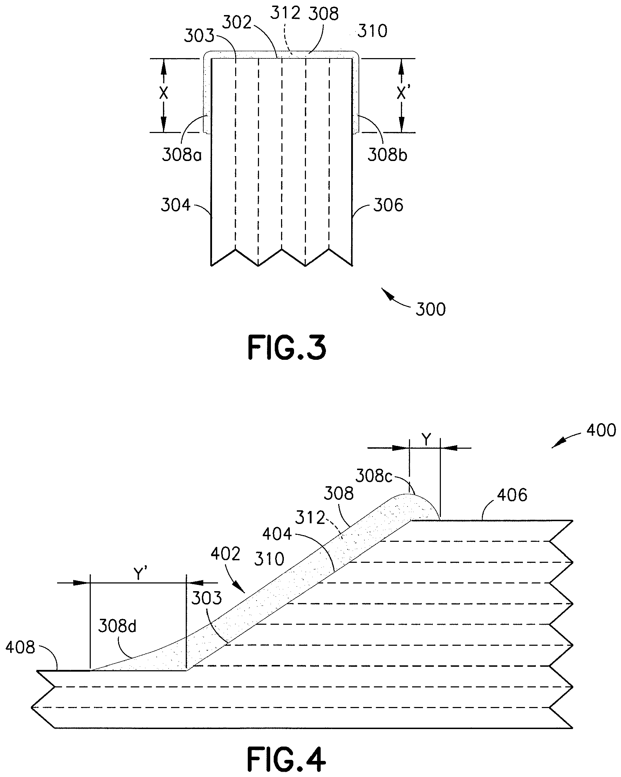

An example of a CFRP component 300 having a cut edge 302 type of exposed fiber surface 303 and opposing surfaces 304, 306 is shown in FIG. 3. Conductive coating material 308 comprising a conductive doping material 310 in a carrier medium 312 is applied to the cut edge 302 and at least a portion of each of the opposing surfaces 304, 306 adjacent to the cut edge 302 so that the conductive coating material 308 covers the cut edge 302 and overlaps at least a portion of each of the opposing surfaces 304, 306 adjacent to the cut edge 302. Specifically, conductive coating material 308 includes overlapping portions 308a and 308b. The width X, X' of the overlapping portions 308a and 308b depends on the particular application and the dimensions of the cut edge 302 but should be sufficient to ensure adhesion to and coverage of the cut edge 302 by conductive coating material 308. The conductive coating material 308 and overlapping portions 308a and 308b of conductive coating material 308 have a thickness of about 0,00254 cm [0.001 inch] to 0,00762 cm [0.003 inch], preferably 0,00508 cm [0.002 inch]. The minimum thickness ensures sufficient coverage while the maximum thickness prevents excessively thick coating material that may result in stress and impose weight penalties.

An example of a CFRP component 400 having a drop off 402 type of exposed fiber surface 303 comprising a sloped surface 404 between an upper surface 406 and a lower surface 408 is shown in FIG. 4. Conductive coating material 308 comprising a conductive doping material 310 in a carrier medium 312 is applied to the sloped surface 404, at least a portion of upper surface 406 and at least a portion of lower surface 408 so that the conductive coating material 308 covers the sloped surface 404 and overlaps at least a portion of the upper surface 406 and lower surface 408 that are adjacent to the slope surface 404. Similar to conductive coating material 308 in FIG. 3, the conductive coating material 308 of FIG. 4 includes overlapping portions 308c and 308d on the upper surface 406 and lower surface 408 respectively. While the upper surface of overlapping portion 308c is shown as having a rounded shape, the upper surface may also be flat or any other shape depending on the particular application and the dimensions of the drop off. Preferably, shape of the upper surface does not have points or sharp transitions. The width Y, Y' of the overlapping portions 308c and 308d depends on the particular application and the dimensions of the drop off 402 but should be sufficient to ensure adhesion to and coverage of the drop off by the conductive coating material 308 . The conductive coating material 308 and overlapping portions 308c and 308d have a thickness of about 0,00254 to 0,00762 cm [0.001 to 0.003 inch], preferably 0,00508 cm [0.002 inch].

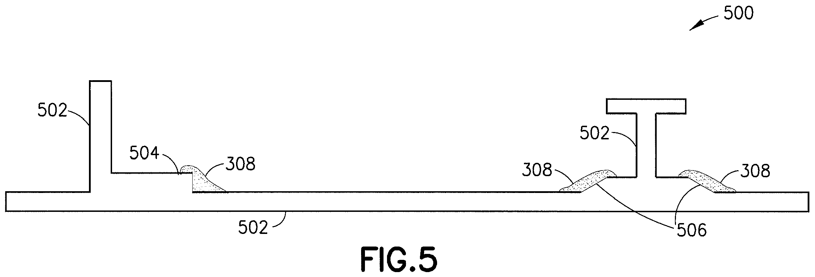

An example of a composite structure 500 made from CFRP components 502 with cut edge 504 and drop off 506 types of exposed fiber surfaces is shown in FIG. 5. Conductive coating material 308 is applied over the exposed fiber surfaces.

Unlike existing methods for protecting composite structures from the danger posed by edge glow, the disclosed method is less time consuming and less labor intensive since it only requires the application of a thin, preferably single, layer of conductive coating material, as opposed to the multiple thicker layers required by existing methods and reduces the amount of weight added to a composite structure. This is particularly advantageous in the aerospace industry since less weight means less fuel consumption and more payload. While the disclosed method is particularly useful in the aerospace industry, it may also be useful in other industries that make use of composite structures that have to be protected against the danger posed by edge glow.

## Claims

1. A method for mitigating edge glow at an exposed fiber surface (303) in a carbon fiber reinforced plastic component (300; 400; 500) of a composite structure, the method comprising: applying a conductive coating material (308) over the exposed fiber surface (303), **characterized in that** the conductive coating material (308) has a conductivity of at least 10⁴ Siemens/meter, and the conductive coating material (308) is applied in one or more layers having a total thickness of 0.00254 to 0.00762 cm.

2. The method of any preceding claim, wherein the conductive coating material (308) is applied in a layer having a thickness of about 0,00508 cm.

3. The method of any preceding claim, wherein the conductive coating material (308) comprises a conductive doping material (310) and a carrier medium (312).

4. The method of claim 3, wherein the conductive doping material (310) is a material selected from the group consisting of indium tin oxide solutions, carbon nanotubes, metallic nanowires, semiconducting nanowires, carbon black, graphene and intrinsically conductive polymers.

5. The method of claim 3, further comprising the steps of:
selecting the carrier medium (312);
selecting the conductive doping material (310);
combining the carrier medium and doping material to form the conductive coating material (308).

6. A composite structure comprising carbon fiber reinforced plastic components having at least one exposed fiber surface (303), and a conductive coating material (308) applied over the at least one exposed fiber surface (303), **characterized in that** the conductive coating material (308) has a conductivity of at least about 10⁴ Siemens/meter, and the conductive coating material (308) is applied in one or more layers having a total thickness of 0.00254 to 0.00762 cm.

7. The composite structure of claim 6, wherein the conductive coating material (308) comprises a conductive doping material (310) and a carrier medium (312), the conductive doping material being selected from the group consisting of indium tin oxide solutions, carbon nanotubes, metallic nanowires, semiconducting nanowires, carbon black, graphene and intrinsically conductive polymers.

## Patentansprüche

1. Verfahren zum Mildern von Kantenglühen einer exponierten Faseroberfläche (303) in einer karbonfaserverstärkten Kunststoffkomponente (300; 400; 500) einer Verbundstruktur, wobei das Verfahren aufweist: Aufbringen eines leitenden Beschichtungsmaterials (308) über der exponierten Faseroberfläche (303), **dadurch gekennzeichnet, dass** das leitende Beschichtungsmaterial (308) eine Leitfähigkeit von zumindest 10⁴ Siemens/Meter aufweist und dass das leitende Beschichtungsmaterial (308) in einer oder mehreren Schichten mit einer Gesamtdicke von 0,00254 bis 0,00762 cm aufgebracht wird.

2. Verfahren nach einem vorhergehenden Anspruch, wobei das leitende Beschichtungsmaterial (308) in einer Schicht mit einer Dicke von ungefähr 0,00508 cm aufgebracht wird.

3. Verfahren nach einem der vorhergehenden Ansprüche, wobei das leitende Beschichtungsmaterial (308) ein leitendes Dotierungsmaterial (310) und ein Trägermedium (312) aufweist.

4. Verfahren nach Anspruch 3, wobei das leitende Dotierungsmaterial (310) ein Material ist, das aus der Gruppe ausgewählt ist, die aus Indiumzinnoxid-Lösungen, Karbon-Nanoröhren, metallischen Nanodrähten, halbleitenden Nanodrähten, Industrieruß, Graphen und intrinsisch leitenden Polymeren besteht.

5. Verfahren nach Anspruch 3, das ferner die Schritte aufweist:
Auswählen des Trägermediums (312);
Auswählen des leitenden Dotierungsmaterials (310);
Kombinieren des Trägermediums und Dotierungsmaterials, um das leitende Beschichtungsmaterial (308) zu bilden.

6. Verbundstruktur, die karbonfaserverstärkte Kunststoffkomponenten mit zumindest einer exponierten Faseroberfläche (303) und ein leitendes Beschichtungsmaterial (308) aufweist, das über der zumindest einen exponierten Faseroberfläche (303) aufgebracht wird, **dadurch gekennzeichnet, dass** das leitende Beschichtungsmaterial (308) eine Leitfähigkeit von zumindest ungefähr 10⁴ Siemens/Meter aufweist und dass das leitende Beschichtungsmaterial (308) in einer oder mehreren Schichten mit einer Gesamtdicke von 0,00254 bis 0,00762 cm aufgebracht wird.

7. Verbundstruktur nach Anspruch 6, wobei das leitende Beschichtungsmaterial (308) ein leitendes Dotierungsmaterial (310) und ein Trägermedium (312) aufweist, wobei das leitende Dotierungsmaterial aus der Gruppe ausgewählt ist, die aus Indiumzinnoxid-Lösungen, Karbon-Nanoröhren, metallischen Nanodrähten, halbleitenden Nanodrähten, Industrieruß, Graphen und intrinsisch leitenden Polymeren besteht.

## Revendications

1. Procédé pour atténuer l'incandescence des bords au niveau d'une surface de fibre exposée (303) dans un composant en plastique renforcé de fibres de carbone (300 ; 400 ; 500) d'une structure composite, le procédé consistant : à appliquer un matériau de revêtement conducteur (308) sur la surface de fibre exposée (303), **caractérisé en ce que**
le matériau de revêtement conducteur (308) présente une conductivité d'au moins 10⁴ Siemens/mètre et le matériau de revêtement conducteur (308) est appliqué en une ou plusieurs couches ayant une épaisseur totale comprise entre 0,00254 et 0,00762 cm.

2. Procédé selon l'une quelconque des revendications précédentes, dans lequel le matériau de revêtement conducteur (308) est appliqué en une couche ayant une épaisseur d'environ 0,00508 cm.

3. Procédé selon l'une quelconque des revendications précédentes, dans lequel le matériau de revêtement conducteur (308) comprend un matériau de dopage conducteur (310) et un milieu de support (312).

4. Procédé selon la revendication 3, dans lequel le matériau de dopage conducteur (310) est un matériau sélectionné dans le groupe constitué par les solutions d'oxyde d'indium-étain, les nanotubes de carbone, les nanofils métalliques, les nanofils semi-conducteurs, le noir de carbone, le graphène et des polymères intrinsèquement conducteurs.

5. Procédé selon la revendication 3, comprenant en outre les étapes consistant :
à sélectionner le milieu de support (312) ;
à sélectionner le matériau de dopage conducteur (310) ;
à combiner le milieu de support et le matériau de dopage pour former le matériau de revêtement conducteur (308).

6. Structure composite comprenant des composants en plastique renforcés de fibres de carbone ayant au moins une surface de fibre exposée (303) et un matériau de revêtement conducteur (308) appliqué sur la ou les surfaces de fibre exposées (303), **caractérisée en ce que** le matériau de revêtement conducteur (308) présente une conductivité d'au moins environ 10⁴ Siemens/mètre et le matériau de revêtement conducteur (308) est appliqué en une ou plusieurs couches ayant une épaisseur totale comprise entre 0,00254 et 0,00762 cm.

7. Structure composite selon la revendication 6, dans laquelle le matériau de revêtement conducteur (308) comprend un matériau de dopage conducteur (310) et un milieu de support (312), le matériau de dopage conducteur étant sélectionné dans le groupe constitué par les solutions d'oxyde d'indium-étain, les nanotubes de carbone, les nanofils métalliques, les nanofils semi-conducteurs, le noir de carbone, le graphène et des polymères intrinsèquement conducteurs.
